Europäisches Patentamt

European Patent Office

Office européen des brevets

(11) Numéro de publication: **0 002 146**
**B1**

(12) **FASCICULE DE BREVET EUROPEEN**

(45) Date de publication du fascicule de brevet: 02.09.81

(21) Numéro de dépôt: 78400164.6

(22) Date de dépôt: 08.11.78

(51) Int. Cl.³: **B 62 D 57/02, B 65 G 7/00,**
**E 02 D 29/06,**
**E 01 D 21/00,**
**E 02 B 17/02, E 01 D 15/14**

(54) Moyens de déplacement, à terre et/ou sur une plage immergée ou non, de lourdes charges.

(30) Priorité: 16.11.77 FR 7734967

(43) Date de publication de la demande:
30.05.79 Bulletin 79/11

(45) Mention de la délivrance du brevet:
02.09.81 Bulletin 81/35

(84) Etats Contractants Désignés:
BE DE GB NL SE

(73) Titulaire: Jourdan, Louis Jules
36, rue de Dinan BP 15
F-35120 Dol de Bretagne (FR)

(72) Inventeur: Jourdan, Louis Jules
36, rue de Dinan BP 15
F-35120 Dol de Bretagne (FR)

(74) Mandataire: Le Guen, Louis François
13, rue Emile Bara BP 91
F-35800 Dinard (FR)

(56) Documents cités:
FR - A - 442 451
FR - A - 502 932
FR - A - 1 132 144
FR - A - 1 388 757
FR - A - 1 416 741
FR - A - 2 140 005
US - A - 1 615 055
US - A - 2 062 657
US - A - 2 822 878
US - A - 3 135 345
US - A - 3 249 168
US - A - 3 576 225

Courier Press, Leamington Spa, England.

Moyens de déplacement, à terre et/ou sur une plage immergée ou non, de lourdes charges

La présente invention concerne des moyens de déplacement, à terre et/ou sur une plage immergée ou non, de lourdes charges, lesquels peuvent être des pontons échouables amphibies et notamment des pontons usines.

L'interêt des pontons usines réside dans le fait que chaque ponton constitue une unité de fabrication dans laquelle les machines sont montées à poste fixe et sont donc utilisables directement, et que cette unité de fabrication peut facilement être transportée par voie fluviale ou maritime au point d'utilisation ou à proximité de celui-ci. Toutefois jusqu'ici, les pontons usines étaient utilisés en étant maintenus à flot, ce qui entraînait toutes les contingences liées aux navires à quai, telles que les précautions à prendre en cas de tempête, en cas de niveaux d'eau variables dûs aux crus et aux marées, etc.

Il y a donc interêt à prévoir des pontons usines échouables pour lesquels les contingences indiquées ci-dessus disparaissent, et un objet de la présente invention consiste précisément à prévoir des pontons amphibies.

Bien entendu, on connaît déjà des véhicules. amphibies qui, à terre se déplacent sur des roues ou des chenilles. Toutefois, quand il s'agit de pontons d'usines qui chacun représentent une masse importante, il devient très difficile de prévoir le nombre de roues suffisant pour éviter les risques d'effondrement local du sol sous le poids du ponton et donc les risques d'accident. De plus, les systèmes à roues, à moins de prévoir des dispositifs de suspension sophistiqués, nécessitent la préparation de surfaces de roulement pratiquement planes. C'est pourquoi au lieu de roues, on a prévu suivant l'invention, de déplacer les pontons sur des patins pouvant glisser sur des semelles, lesquelles sont déplacées au fur et á mesure du glissement.

Pour déplacer des lourdes charges sur terre, on a déjà envisager ce type de dispositif à patin et semelle et, à ce sujet, l'état de technique peut être utilement illustré par les descriptions des brevets FR—A—1 416 741 et FR—A—2 140 005, et des brevets US—A—3 135 345, US—A—3 576 225 et US—A—2 062 657.

Le glissement entre le patin et la semelle peut être amélioré en prévoyant entre leurs surfaces de contact un matériau lubrifiant. On peut également prévoir, à cet effet, des billes ou des roulettes qui, toutefois, rendent le matériel nettement plus complexe et plus fragile.

En fait, dans tous les engins se déplaçant sur des dispositifs à patin et à semelle, qui sont actuellement connus, les dispositifs à patin sont montés à demeure sur les engins. Dans le cas où l'engin est un ponton usine pour lequel les temps de déplacement sont, en principe, beaucoup plus courts que les temps d'immobilisation, il est intéressant, ce qui est un object de l'invention, de prévoir des dispositifs à patin et semelle qui soient amovibles et qui ainsi ne sont immobilisés que le temps de transfert des pontons amphibies, afin d'augmenter la rentabilité de ces dispositifs.

En conséquence, suivant l'invention, il est prévu des moyens de déplacement à terre et/ou sur une plage immergée ou non de lourdes charges comprenant des jeux de béquilles. pratiquement verticales pouvant descendre ou monter dans des puits pratiqués dans la charge à déplacer, chaque béquille portant à son extrémité inférieure, un patin pouvant glisser sur une semelle associée, au moyen de vérins, le déplacement de la charge étant obtenu en faisant descendre les béquilles ce qui soulève la charge, puis en faisant glisser les patins sur leurs semelles associées en commandant lesdits vérins dans un sens de manière à déplacer l'ensemble de la charge et des béquilles par rapport aux semelles appliquées au sol, puis en remontant les béquilles pour poser la charge, et, enfin, en déplaçant les semelles des béquilles relevées par rapport à leurs patins en commandant lesdits vérins en sens inverse, dans lesquels les béquilles sont amovibles et comportent, à leurs extrémités supérieures, des moyens de verrouillage pour verrouiller chaque béquille dans une gorge pratiquée dans chaque puits, lesdits moyens de verrouillage étant automatiquement commutés en position de verrouillage quand on enfile un béquille dans un puits et que les moyens de verrouillage atteignent ladite gorge, laquelle est creusée dans une section transversale du puits.

Suivant une autre caractéristique de l'invention, les moyens de verrouillage peuvent être déverrouillés par une commande extérieure pour sortir chaque béquille de son puits.

Suivant une autre caractéristique, chaque puits est ouvert aux deux bouts pour permettre la sortie ou l'entrée d'une béquille par un bout ou par l'autre, chaque patin étant amovible de façon à permettre le passage de la béquille seule par le bout supérieur du puits.

Suivant une autre caractéristique, lesdits moyens de verrouillage sont constitués par deux premiers bras de levier pivotant symétriquement autour d'un premier axe solidaire du sommet de la béquille et de deux seconds bras de levier pivotant symétriquement autour d'un second axe, chaque second bras étant respectivement monté pivotant sur un bras de manière à former un quadrilatère articulé à deux paires de bras, les seconds bras étant sensiblement plus courts que les premiers bras, les premiers et seconds bras formant en position de verrouillage des angles ouverts vers le haut moins largement pour les premiers bras dont les extrémités sont engagées dans la gorge du puits que pour les second bras, lesdites extrémités des premiers bras supportant la charge quand les béquilles sont descendues et les seconds bras servant d'arcs-boutants empêchant les premiers bras de se refermer quand la béquille est remontée et donc suspendue auxdits moyens de verrouillage.

Suivant une autre caractéristique, les moyens de liaison entre le bras d'une béquille et le patin associé sont constitués par une clavette perpendiculaire à la direction de glissement du patin, ladite clavette passant successivement à travers des trous prévus dans des pattes verticales soudées sur les patins et de diamètre voisin de celui de la clavette, et des trous prévus dans les parois de la béquille, caractérisés en ce que le diamétre des trous prévus dans les parois de la béquille est plus grand que celui de la clavette, de manière que, quand la béquille supporte la charge, le bas de la béquille repose directement sur le patin.

Suivant une autre caractéristique, ladite clavette a une tête comportant une poignée excentrant le centre de gravité de la clavette et bloquant tout mouvement longitudinal de celle-ci, en position de couplage, mais facilement amovible pour permettre la séparation du patin de la béquille.

Suivant une autre caractéristique, la béquille est constituée d'un vérin dont le sommet constitue le sommet de la béquille accroché auxdits moyens de verrouillage et d'une poutre verticale qui est reliée par des moyens d'accouplement manoeuvrables du haut du haut du puits á l'extrémité de la tige du vérin.

Par ailleurs, dans le brevet FR—A—1 132 144, il est décrit un dispositif pour déplacer de lourdes charges, dans lequel il est prévu, à la partie inférieure de la charge, un compartiment, ouvert vers le bas, dans lequel du liquide sous pression est amené pendant le déplacement de la charge. Dans ce dispositif, il est également prévu de limiter le compartiment par un joint d'etanchéité qui limite les fuites du liquide sous pression.

Suivant une autre caractéristique de l'invention, entre les parties planes du patin qui glissent sur les parties planes de la semelle, on injecte de l'eau sous haute pression, de manière à établir entre lesdites parties planes un film d'eau servant de lubrifiant.

Suivant une autre caractéristique de l'invention, l'eau est injectée dans un réseau de canaux formés de la partie plane de la semelle et d'une partie creusée dans la partie plane du patin, les canaux formant des derivations réparties sur l'ensemble de la surface du patin.

Suivant une autre caractéristique, les moyens de commande des vérins sont des groupes hydrauliques répartis par zone et commandés à distance par des moyens électriques, afin de répartir les actions sur lesdits vérins.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 est un vue schématique de côté d'un ponton pourvu de béquilles suivant l'invention,

la Fig 2 est une vue schématique en coupe du ponton de la Fig. 1, suivant la ligne II—II, pour illustrer la mise en place des béquilles, quand le ponton flotte.

la Fig. 3 est une vue schématique partielle, en coupe de deux pontons accolés de la Fig. 1, suivant la ligne III—III, pour illustrer le démontage des patins, quand les pontons sont posés à terre,

la Fig. 4 est une vue en coupe longitudinale partielle de la partie haute d'un puits du ponton et de l'extrémité supérieure d'une béquille au cours de son ascension dans le puits,

la Fig. 5 est la même vue du puits qu'à la Fig. 4, mais montrant les moyens de verrouillage de la béquille verrouillée, ainsi que le dispositif à vérin pour abaisser ou relever le patin,

la Fig. 6 est une vue de dessus d'un détail de l'accouplement du dispositif à vérin avec la béquille,

la Fig. 7 est une vue de côté du dispositif d'accouplement entre la béquille et le patin, qui lui est associé,

la Fig. 8 est une vue de dessus du dispositif d'accouplement montré à la Fig. 7,

la Fig. 9 est une vue en coupe longitudinale d'une patin de béquille associé à une semelle,

la Fig. 10 est une vue en coupe transversale du patin et de la semelle de la Fig. 9,

la Fig. 11, est une vue en coupe à plus grande échelle de l'interface entre le patin et la semelle de la Fig. 9, suivant la ligne XI—XI de la Fig. 12,

la Fig. 12 est une vue partielle du dessous de la face du patin en contact avec la face supérieure de la semelle,

la Fig. 13 est une vue de côté d'un ponton échouable, suivant l'invention, prévu pour servir d'appontement, et

la Fig. 14 est une vue en coupe transversale du ponton de la Fig. 13.

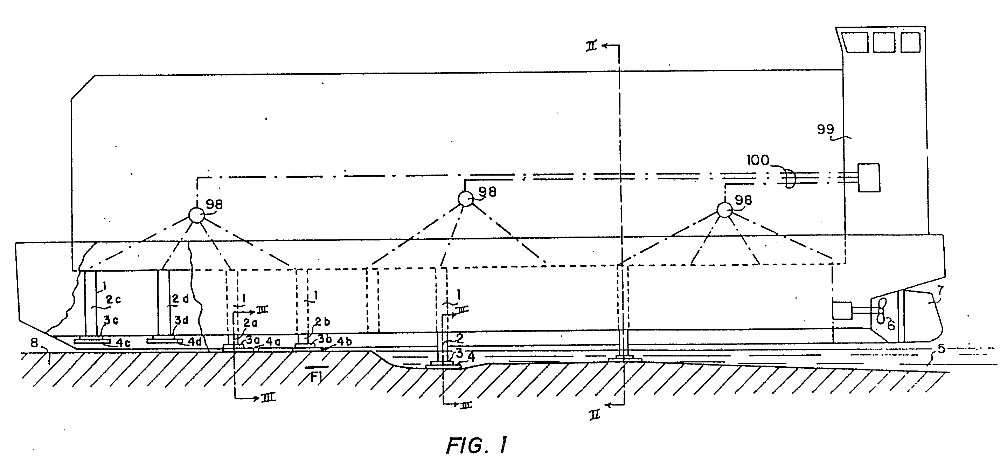

Le ponton de la Fig. 1 a une coque pourvue de deux rangées latérales, au moins, de puits verticaux 1 contenant chacun une béquille 2. Chaque béquille 2 est pourvue à son extrémité inférieure d'un patin 3 supportant une semelle 4 par rapport à laquelle il peut être soumis à des mouvements de glissement. Chaque béquille 2 peut monter ou descendre dans son puits 1 associé.

Quand toutes les béquilles sont remontées dans leurs puits au maximum, comme on l'a représenté à l'arrière du ponton, le ponton peut flotter sur l'eau 5 et être déplacé soit par ses moyens propres tels que l'hélice 6 associée au gouvernail 7, soit par des moyens de remorquage externes, tant qu'il y a assez d'eau.

Quand il n'y a plus assez d'eau ou même plus du tout d'eau, les béquilles 2 munies de leurs patins 3 et semelles 4 permettent encore de deplacer le ponton. En effet, on peut descendre les béquilles de manière à soulever légèrement l'ensemble du ponton comme le schématisent les béquilles 2a et 2b. Par des moyens appropriés, on force les patins a et b à glisser sur leurs semelles respectives 4a et 4b, dans le sens indiqué par la flèche F1. Puis, on relève les béquilles par rapport au ponton, ce qui a pour effet de faire descendre le ponton jusqu'à ce qu'il repose sur le fond, de préférence plat, de sa coque, les béquilles étant remontées jusqu'à ce que leurs semelles 4 ne soient plus en contact avec le sol 8, comme le schématisent les béquilles 2c et 2d. Par des moyens appropriés, on force les semelles 4c et 4d à glisser sous leurs patins respectifs 3c et 3d, toujours dans le sens de la flèche F1. Puis on fait descendre les béquilles pour soulever le ponton et ainsi de suite. On comprend alors qu'il est possible de faire avancer le ponton de la course relative patin-semelle à chaque opération qui peut être renouvelée assez rapidement. Les semelles 4 ont ensemble une surface totale suffisante pour ne pas s'enfoncer dans le sol même meuble sous le poids du ponton.

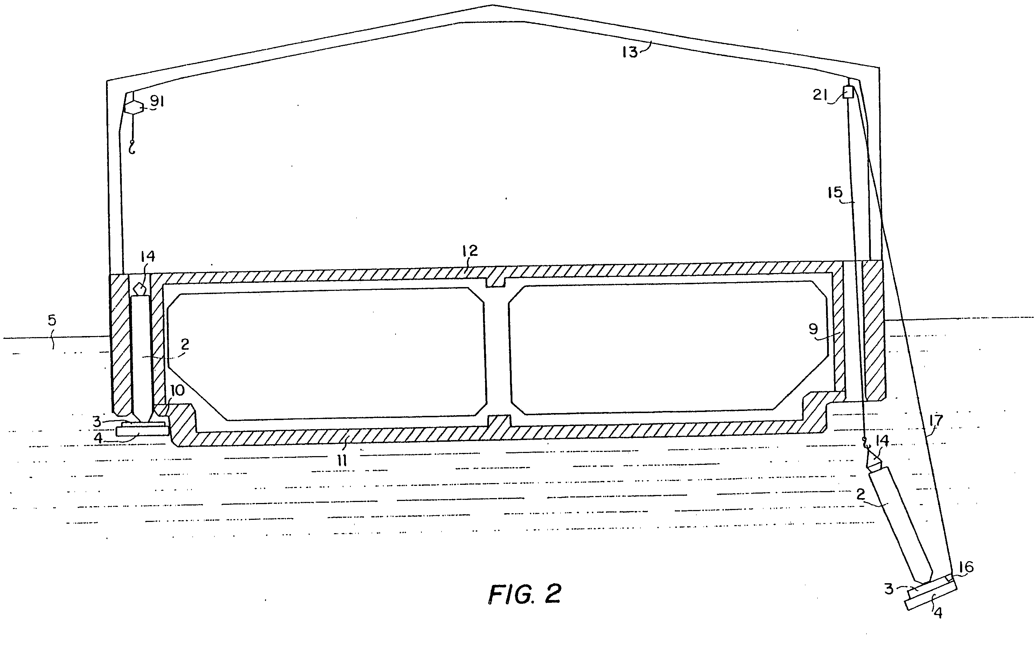

Comme le montre la coupe de la Fig. 2, la coque à fond plat présente, sur les deux bords latéraux du fond, à la jonction avec les murs verticaux 9, au lieu d'un dièdre saillant un dièdre rentrant dans la partie horizontale 10 duquel débouchent les puits 1. La largeur de la partie 10 est légèrement supérieure à celle de la semelle 4 du patin d'une béquille 2 et sa hauteur au-dessus de la partie la plus basse du ponton, ici la face inférieure du fond 11, légèrement supérieure à la hauteur d'une semelle 4 plus celle d'un patin 3, de manière qu'en remontant la béquille dans le puits la semelle 4 puisse être complètement dégagée du sol.

Les puits 1 débouchent vers le haut au-dessus du niveau de l'eau 5 quand le ponton flotte. En pratique, la coque du ponton peut être en béton armé et vibré, des cloisons en béton transversales et longitudinales formant des compartiments pouvant servir de cale et de réservoir entre le fond 11 et le pont 12. Le pont 12 peut être surmonté d'une superstructure en charpente métallique 13 à l'intérieur de laquelle peut se loger un atelier, par example, pourvu de palans ou grues mobiles ou d'engins de levage, tels que 91, le long des rangées de puits 1.

Chaque béquille 2 est munie à son extrémité supérieure de moyens de verrouillage 14 auxquels on peut accrocher un câble de levage 15. A l'autre extrémité de la béquille 2, le patin 3 comporte des moyens d'accrochage 16 auxquels est fixé un câble de mise à l'eau 17. Les câbles 15 et 17 sont actionnés d'une manière coordonnée en utilisant les engins de levage 91.

La Fig. 2 montre comment il est possible de mettre en place, en pleine mer, une béquille 2 dans un puits 1. Le câble 15 est descendu dans le puits 1 et son extrémité estr récupérée le long du bord, puis remontée sur le pont 12. On accroche au bout de 15, les moyens de verrouillage 14 tandis qu'au bout du câble 17, on accroche les moyens d'accrochage 16 du patin 3. ainsi tenue à ses deux bouts, la béquille 2 est mise à l'eau par dessus bord. Quand elle a atteint une profondeur suffisante au-dessous du fond 11, on remonte le câble 15 dans le puits 1, ce qui a pour effet de placer la béquille 2 dans la position indiquée à la Fig. 1. Le haut de la béquille est dirigé vers l'ouverture inférieure du puits 1, puis remonte dans celui-ci. Quand les moyens de verrouillage 14 ont atteint leur position de verrouillage, ils sont actionnées et la tête de la béquille 2 se trouve rendue solidaire, en un point déterminé, de la paroi du puits 1.

Il apparaît de ce qui précède qu'il est possible de faire naviguer le ponton sans les béquilles 2, ce qui présente de nombreux avantages. Tout d'abord les béquilles 2 et, en particulier, leurs patins 2 et semelles 3 ne sont pas soumis à l'action corrosive de l'eau de mer ou de l'eau douce pendant les déplacements maritimes ou fluviaux du ponton. Ensuite, celui-ci ne présente pas d'aspérités sur sa coque, ce qui permet de lui donner une plus grande vitesse sans dépense d'energie trop grande. Enfin, pendant le temps des voyages des pontons, ainsi, comme on le verra dans la suite, que pendant les arrêts à terre, le jeu de béquilles peut être utilisé sur d'autres pontons. Or, comme on le verra dans la suite, les béquilles 2 sont relativement complexes, ce qui entraîne qu'elles sont chéres et qu'il y a lieu de limiter au mieux leur temps de non utilisation.

Il est également prévu la possibilité de retirer les béquilles 2 des puits en pleine mer. A cet effet, avant la mise à l'eau du ponton, on accroche aux moyens d'accrochage 16 du patin un câble 17 que l'on laisse pendre le long du bord. Il suffit alors, au moment de l'operation, de déverrouiller les moyens 14, après y avoir accroché un câble 15, puis de laisser descendre la béquille 2 dans l'eau, et, enfin, de la récupérer en utilisant le câble 17.

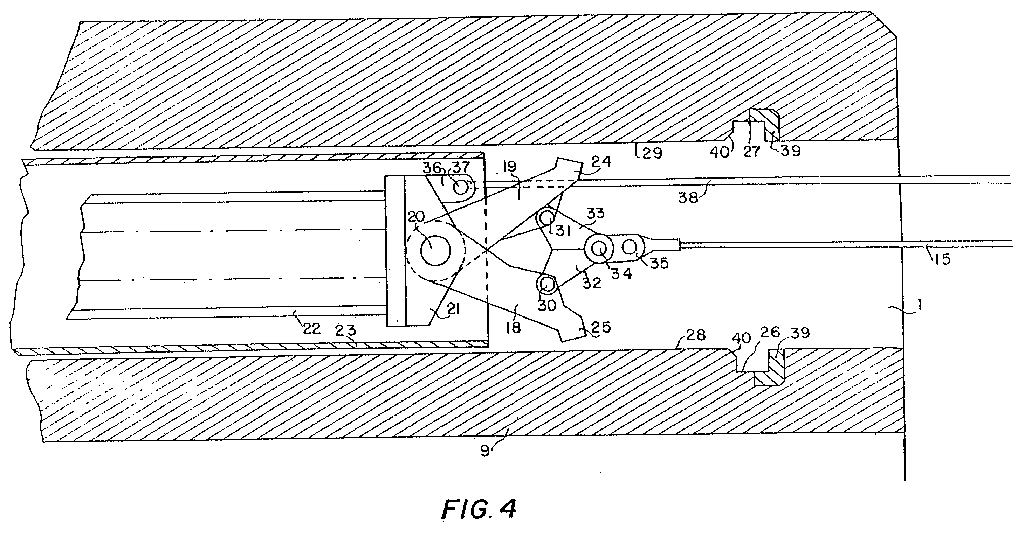

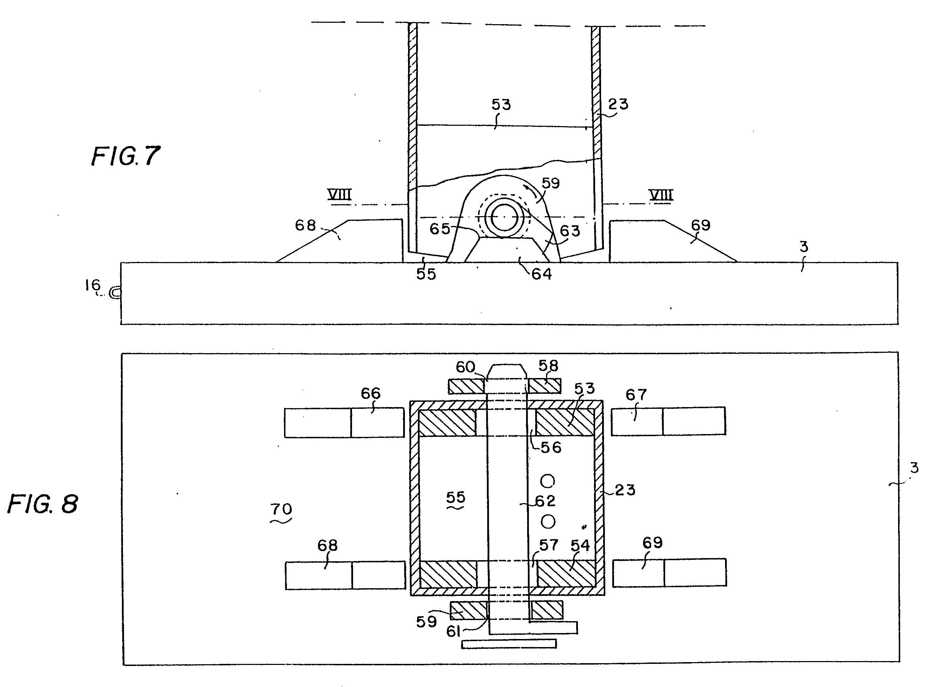

Par ailleurs, le patin 3 est monté au bout de chaque corps de béquille d'une manière amovible, les moyens d'accouplement entre le patin 3 et la béquille étant montrés aux Figs. 7 et 8. comme le montre la Fig. 3, quand deux pontons sont placés côte à côte à terre, une fois les béquilles 2 otées sur l'un des pontons, il reste assez de place sous le rebord 10 de celui-ci pour avoir accès aux moyens d'accouplement des patins des bequilles de l'autre ponton. Une fois, les patins désaccouplés, on récupère les corps de béquilles au moyen du câble 15, après avoir déverrouillé les moyens 14, en remontant les corps de béquille à l'intérieur du ponton à travers les ouvertures supérieures des puits 1. Il apparaît donc que les béquilles ne sont utilisées que lors des déplacements des pontons et ne restent pas inutilement immobilisées entre ceux-ci.

La Fig. 4 montre les moyens de verrouillage 14 en position déverrouillée, au cours de la montée d'une béquille 2 dans un puits 1, par exemple. Les moyens 14 comportent deux bras 18 et 19 articulés autour d'un axe commun 20, solidaire de la base 21 d'un cylindre de vérin 22 monté à l'intérieur du corps 23 de section carrée d'une béquille. Chaque bras 18 ou 19 a une extrémité libre 24 ou 25, respectivement, ayant une forme appropriée pour venir prendre place dans des encoches 26 ou 27, respectivement, prévues dans les parois opposées 28 et 29 du puits 1 à section carrée. Chaque bras 18 ou 19 porte un axe horizontal 30 ou 31, respectivement, autour duquel s'articule un bras court 32 ou 33, respectivement. Les bras 32 et 33 ont leurs extrémités opposées respectivement à 30 et 31 montées pivotantes sur un axe 34 supporté par un maillon 35 auquel est attaché un bout de câble 15.

En position déverrouillée, l'ensemble des bras 18, 19 et 32, 33 est soumis au poids de toute la béquille, soit une force verticale, mais dirigée vers le haut ayant son origine sur l'axe 34. Le quadrilatère formé par les axes 10, 34, 30 et 31 est alors plus fermé que sur la Fig. 4 où on a ouvert les bras 18, 19, 32 et 33 dans un but d'illustration. L'ensemble des moyens 14 est évidemment symétrique par rapport à une ligne verticale qui est l'axe de symétrie vertical de la béquille.

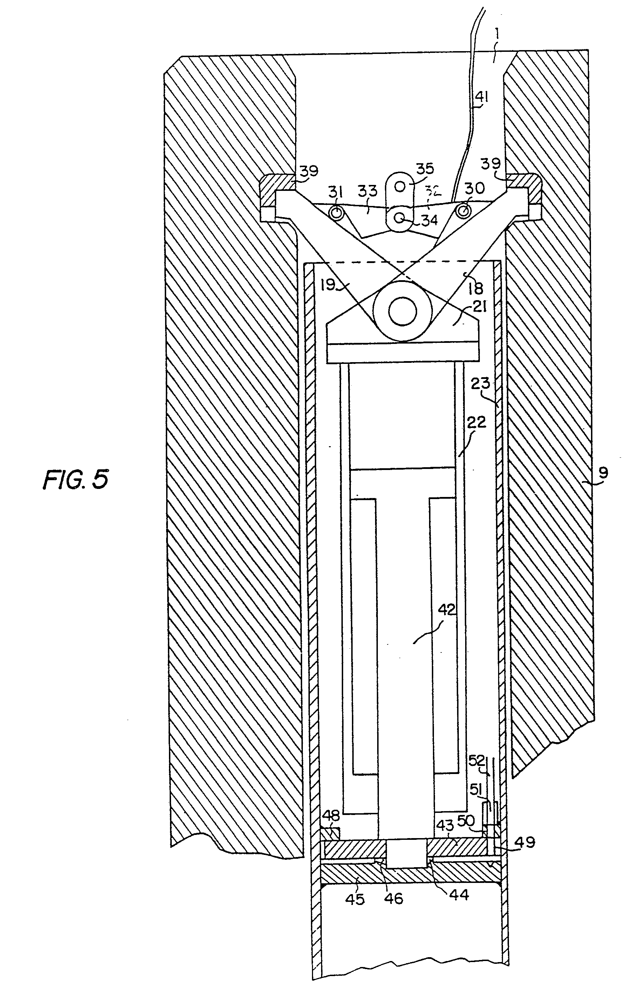

En position verrouillée, Fig. 5, les bras 18 et 19 forment un angle largement ouvert vers le haut et ont leur extrémités respectives 24 et 25 coincés dans les encoches 26 et 27. Dans cette position, quand la semelle 4 de la béquille repose sur le sol et que le poids ou au moins une partie du poids du ponton repose sur les extrémités 24 et 25 par l'intermédiaire des faces supérieures des encoches 26 et 27, la position des bras 18 et 19 tend à se confirmer. Par ailleurs, dans cette position, l'axe 34, sous l'effet du poids propre des bras 32 et 33 descend un peu au-dessous de la ligne horizontale définie par les axes 30 et 31 les bras 32 et 33 forment un angle largement ouvert vers le haut, les côtés de cet angle étant par exemple inclinés d'environ 6° par rapport à l'horizontale. Dans ces conditions, quand la semelle de la béquille est élevée au-dessus du sol, comme on l'a vu plus haut pour déplacer la semelle par rapport au patin avant un nouveau pas, ce sont les encoches 26 et 27 qui retiennent la béquille dans le puits 1. En effet, les bras 18 et 19 ont alors tendance à se fermer, mais en sont empêchés par les bras 32 et 33 qui s'arc-boutent. En conséquence, l'ensemble 14 garde la même configuration ce qui assure la suspension de la béquille 2 dans le puits 1. En position verrouillée, on peut détacher le bout de câble 15 du maillon 35 et s'en servir pour actionner une autre béquille.

A proximité de son bord supérieur, le corps 23 de la béquille présente une ouverture 36 par laquelle on peut passer, par l'intérieur du corps 23, le bout 37 d'un crochet prolongé par une tringle 38 suspendue au bout d'un câble, non montré. Quand on désire, après avoir fait monter suffisamment la béquille 2 dans le puits 1, faire passer les moyens 14 de la position déverrouillée de la Fig. 4 à la position verrouillée de la Fig. 5, on manipule à travers l'ouverture supérieure du puits, la tringle 38 pour accrocher à 37 l'ouverture 36, puis on tend le câble qui soutient la tringle 38 afin de supporter la béquille, non plus par le câble 15, mais par la tringle 38. Sous l'effet de leur poids, les bras 18 et 19 s'ouvrent. Puis, on déplace verticalement la tringle 38 pour amener les extrémités 24 et 25 à venir s'engager dans les encoches 26 et 27, de manière que les bras 32 et 33 prennent la position décrite en relation avec la Fig. 5. Le verrouillage est alors terminé et la tringle 38 peut être retirée et le câble 15 détaché. Pour passer de la position verrouillée à la position déverrouillée, on replace la tringle 38, avec son crochet 37 dans 36, pour maintenir la béquille en place, puis on accroche le bout du câble 15 à 35 et on le tend pour faire remonter l'axe 34 au-dessus de la ligne des axes 30 et 31. En relâchant la tringle 38, on permet à la béquille de descendre ce qui fait sortir 24 et 25 de 26 et 27. On retrouve la situation de la Fig. 4, qui permet soit de laisser la béquille filer à l'eau, soit de la sortir par le haut si le patin a été préalablement démonté.

Les encoches 26 et 27 peuvent en pratique être constituées par une couronne en fonte ou en acier coulé 39 mise en place à l'occasion de la coulée du béton constituant les parois du puits 1. La couronne 39 peut avoir une section verticale en L renversé ou mieux en U, ouvert vers le puits, de manière qu'à la mise en place ou au retrait des extrémités 24 et 25, les chanfreins 40 ne soient pas endommagés. Les extrémités 24 et 25 ont un profil rectangulaire sur trois côtés, correspondant aux trois faces internes du U 39, afin d'epouser, a jeu nécessaire près, la forme de celui-ci. Il fauter noter que, comme le corps 23 de la béquille et le puits ont une section carrée, on peut accrocher la béquille dans le puits suivant deux directions perpendiculaires. Il faut encore noter que les côtés respectifs des sections de 23 et de 1 sont pratiquement égaux, au jeu nécessaire près à l'introduction de la béquille 2 dans le puits 1, ou à son retrait, de manière que, quand la béquille concourt à porter le ponton, elle ne prenne pas une position oblique dans son puits.

Dans le cylindre de vérin 22, se déplace, sous l'action soit du poids supporté par 22, soit de la pression hydraulique d'un fluide admis dans le cylindre par la tuyauterie 41, représentée schématiquement, un piston de vérin 42 dont l'extrémité libre traverse une plaque d'accouplement 43 qu'elle traverse pour se loger dans le creux 44 d'une plaque d'appui 45, laquelle est soudée horizontalement par ses côtés aux parois verticales internes du corps 23. Autour de l'extrémité de 42, entre la plaque 43 et la plaque 45, est prévue une rondelle 46 servant de butée.

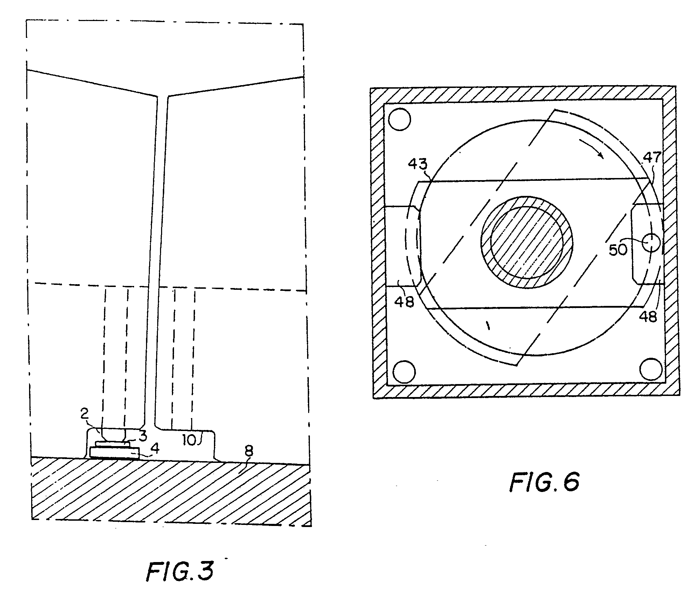

Comme le montre la Fig. 6, la plaque l'accouplement 43 a une forme générale rectangulaire relativement allongée avec, par exemple, des petits côtés légèrement convexes 47, qui, en position verrouillée de la plaque 43, viennent se loger sous les butoirs 48, formés de petites plaquettes soudées aux faces correspondantes du corps 23. La distance entre le plan des plaquettes 48 et la plaque 45 est telle que la plaque 43 puisse se loger entre elles en écrasant un peu la rondelle 46. Pour accoupler la plaque 43 avec le corps 23, on descend l'ensemble du vérin 22—42 dans le corps jusqu'à ce que le bout de 42 pénètre dans le creux 44, la plaque 43 étant tournée par rapport à la position de verrouillage, comme indiqué la ligne en traits tirets, afin de descendre entre les plaquettes 48, puis en appuyant sur le vérin on le fait tourner afin d'engager la plaque 43 sous les plaquettes 48 jusqu'à ce qu'un trou 49 percé dans la plaque 43 vienne s'aligner avec un trou 50 percé dans l'une des plaquettes 48. On introduit alors une clavette 51 constituée par le bout d'une tige 52 manoeuvrable de l'extérieur du corps 23, ce qui assure la jonction entre 43, c'est à dire en fait de l'ensemble du vérin 22—42 et des moyens 4, et le corps 23 de la béquille 2.

En faisant manoeuvrer le vérin 22—42 par variation de la pression hydraulique appliquée au fluide de la canalisation 41, on peut faire descendre ou monter la plaque 45 par rapport au cylindre 22, c'est à dire déplacer le corps 23 dans le puits 1, la base 21 du cylindre 22 étant fixe par rapport au puits.

La Fig. 7 est une vue avec coupe partielle verticale de la liaison entre le bas du corps 23 l'une béquille 2 et un patin 3, dont seule la partie supérieure est visible. La Fig. 8 est une vue de dessus de cette liaison, avec coupe horizontale du corps 23, suivant la ligne VIII—VIII de la Fig. 7.

L'extrémité inférieure du corps 23 qui, comme on l'a vu en relation avec les Figs. 4 à 6, est une poutre métallique creuse à section carrée, est obtenue en coupant cette poutre suivant un dièdre à arête horizontale, les demi-plans du dièdre étant inclinés symétriquement par rapport à l'horizontale d'un angle maximal de 7° environ et l'arête étant perpendiculaire aux côtés du corps dirigés parallèlement au sens de déplacement du ponton, en leurs milieux. Comme le montre la Fig. 8, la base ainsi créée du corps 23 est renforcée par des plaques de tôle 53 et 54 soudées aux faces de 23 parallèles au déplacement et coupées, en bas, suivant le même dièdre. Il faut noter que les bords inférieurs du corps 23 et des plaques 53 et 54 reposent directement sur la face supérieure 55 du patin 3, quand le patin supporte la béquille 2. Les plaques 53 et 54, ainsi que les faces adjacentes de 23 sont percées de deux orifices alignés 56 et 57. Par ailleurs, sur la face 55 de 3, de part et d'autre des trous 56 et 57, sont prévues deux pattes épaisses verticales 58 et 50 percées respectivement de trous 60 et 61. A travers successivement les trous 60, 56, 57 et 61, peut être enfilée une goupille 62, formée par exemple d'un tube à paroi épaisse, qui solidarise le patin et le corps de la béquille. Les diamètres des orifices 56 et 57 sont nettement supérieurs à celui de la goupille 62 de manière que quand le poids de la béquille est appliqué au patin servant d'appui, la goupille ne soit soumise à aucun effort, les efforts étant appliqué aux surfaces de contact entre 55 et la base du corps 23, comme on l'a dit plus haut. Par contre, quand le corps 23 de la béquille est relevé dans le puits 1, par le vérin 22—42, le patin 3 et sa semelle 4 étant suspendus, la goupille 62 soulève le patin et la semelle. Les diamètres des trous 60 et 61 sont égaux, au jeu nécessaire près, à celui de la goupille 62. Une extrémité de la goupille 62 est pourvue d'une plaquette 63, qui lui est soudée et dont le plan est perpendiculaire à l'axe de 62, la plaquette 63 étant tout entière d'un côté de la goupille 62 par rapport à l'axe de cette dernière de manière à conserver, par son poids, la position angulaire qui lui est donnée une fois la goupille enfoncée. Sur la face 55 de 3, au-delà de la plaquette 63, par rapport à 58, est prévue une patte verticale 64, sensiblement dans l'alignement de la goupille 62, mais avec son bord supérieur 65 situé au-dessous du cylindre défini par la goupille 62. Ainsi, quand la plaquette 63 est orientée vers le haut, on peut enfiler la goupille 62, comme indiqué, au-dessus du bord 65. Puis, pour bloquer la goupille 62, on laisse la plaquette 63 retomber en tournant entre 58 et 64, ce qui assure le verrouillage de 62. De part et d'autre du corps 23, respectivement dans les alignements des plaques de renforcement 58 et 59, sont prévues, sur la face 55 de 3, des plaques de faible hauteur 66 à 69 qui servent de butées pour limiter les mouvement de translation relatifs entre le corps 23 et le patin 3, malgré les jeux entre la goupille 62 et les trous 58 et 59.

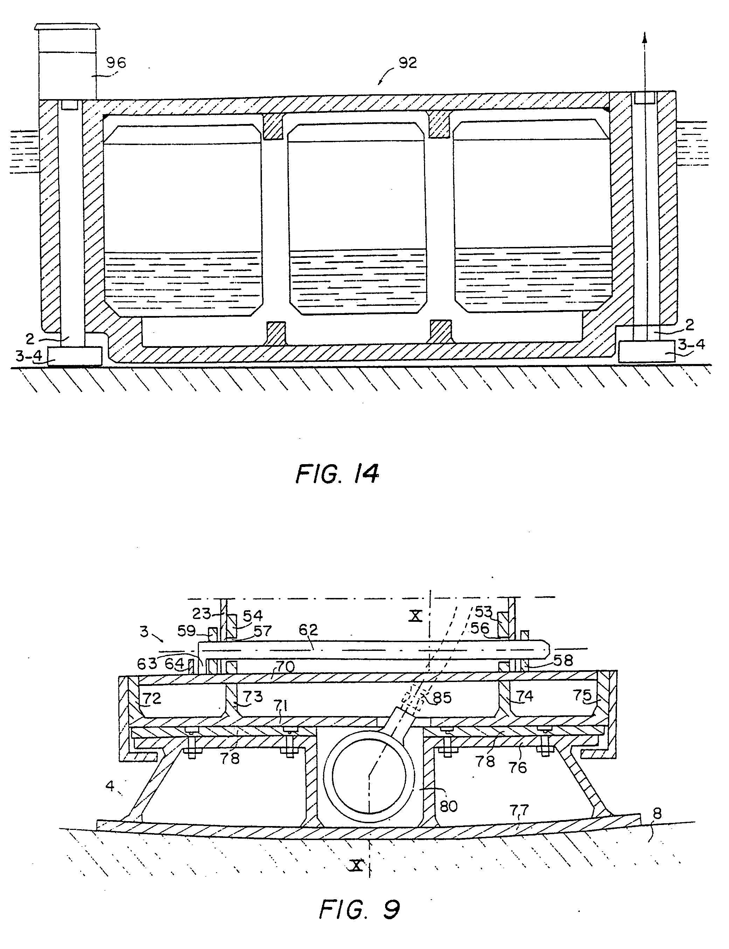

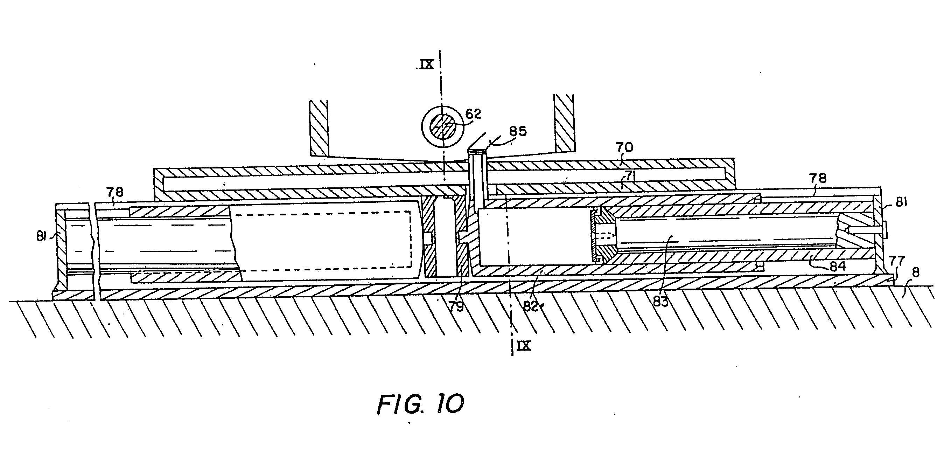

Les Figs. 9 et 10 représentent l'assemblage de la semelle 4 sur le patin 3. Le patin 3 est constitué par une plaque supérieure 70 et une plaque inférieure 71 réunies par des entretoises 72 à 75, qui sont verticales, 72 et 75 formant les faces latérales et 73 et 74 se trouvant à l'aplomb des plaques de renforcement 58 et 59. La semelle 4 est plus longue que le patin 3. Elle est constituée, comme la patin 3, par un assemblage soudé de plaques d'acier et de fers plats, dont notamment une plaque supérieure 76 et une plaque inférieur 77 reposant sur le sol. La face supérieure de la plaque 76 est garnie d'une plaque 78 de matière synthétique anti-friction. Sur la plaque inférieure 71 du patin, est rapportée par soudure, au milieu de sa longueur, une butée 79 dirigée vers le bas, constituée par un fer U étroit et court, ou par deux plaquettes transversales par rapport à la direction d'avancement, qui s'engage dans une gouttière 80 s'étendant suivant l'axe longitudinal de la semelle 4. La gouttière 80 est fermée à chacune de ses extrémités par une plaque 81.

Il faut noter que la coupe de la Fig. 9 est faite suivant la ligne IX—IX de la Fig. 10 tandis que la coupe de la Fig. 10 est faite suivant la ligne X—X de la Fig. 9, et que sur la gauche de la Fig. 10, la semelle 4 est représentée en coupe partielle.

De part et d'autre de la butée 79, sont disposés coaxialement dans la gouttière 80 deux vérins à simple effet constitués chacun par un cylindre 82 adossé à la butée 79 et une tige d'acier 83 fixée, à son extrémité, à la plaque 81 correspondante et entourée d'un manchon 84 interchangeable en matière synthéthique anti-friction.

L'alimentation de chaque vérin 82—83 s'effectue, au voisinage de la butée 79, par une canalisation flexible 85 passant à travers un ajout de la base 71 du patin 3 et à travers un autre ajout de la plaque 70 à l'intérieur du corps de béquille 23.

Il est clair qu'en alimentant alternativement l'un, puis l'autre vérin 82—83, on obtient le glissement relatif de la semelle 4 sous le patin 3, alternativement vers l'avant et vers l'arrière. Bien entendu, les vérins 82—83, comme 22—42 étant soumis à l'action de l'eau de mer sont du type "marine": cylindres et tiges de piston en acier inoxydable, manchons plastiques interchangeables, comme il a été dit, pièces en bronze remplacées par des pièces en plastique industriel pour éviter l'effet d'electrolyse avec les pièces voisines en acier. De même les raccords de canalisations flexibles sont en acier inoxydable.

On rappelle, comme cela a été décrit en relation avec la Fig. 1, que l'avancement du ponton s'effectue par cycles répétés. Chaque cycle comprenant les manoeuvres suivantes.

1) levage du ponton sur ses béquilles 2,

2) glissement des patins 3 sur les semelles 4, fermement ancrées sur le sol,

3) repos du ponton sur le fond de sa coque,

4) avancement des semelles 4 sous les patins 3 relevés,

Il faut noter que l'avancement des semelles 4 nécessite pour les vérins correspondants un effort beaucoup moins important que celui qui est nécessaire pour déplacer le ponton sur ses semelles. On peut donc prévoir l'un des vérins 82—83 plus faible ou alimenté par de l'air comprimé au lieu de fluid hydraulique sous pression.

La matière plastique de la plaque 78 peut par exemple être du polytétrafluoréthyléne connu sous la marque "ERTAFLUOR", qui possède un excellent coefficient de glissement.

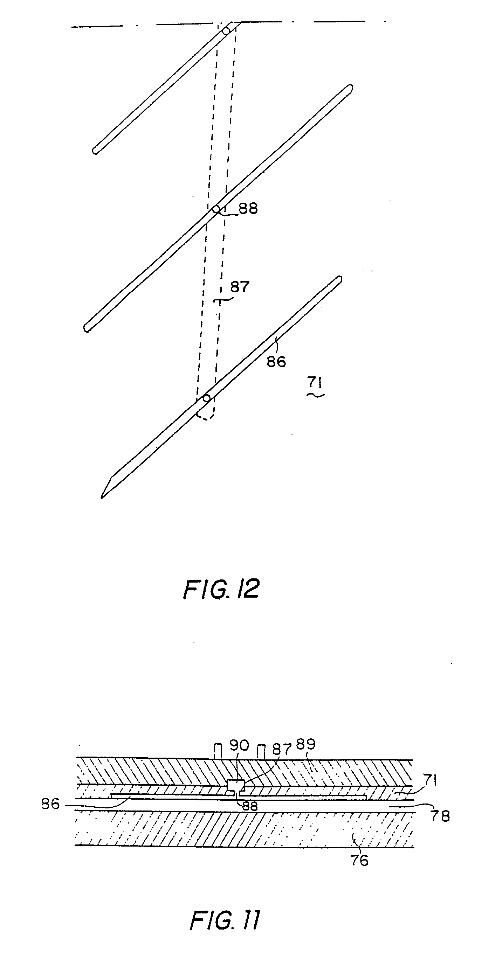

La Fig. 11 est une coupe de l'interface entre la plaque inférieure 71 du platin et la plaque de glissement 78 fixée sur la semelle, à une échelle plus grande qu'aux Figs. 9 et 10, et comportant un dispositif permettant encore d'améliorer la qualité du glissement entre ces plaques en prévoyant entre elles un coussin d'eau sous pression. La Fig. 12 montre la plaque inférieure 71, vue de dessous, laquelle présente des réseaux ramifiés de rainures 86 creusées dans la surface de 71. Chaque réseau de rainures 86 est alimenté à partir d'une rainure d'alimentation 87, creusée de l'autre côté de la plaque 71 par rapport aux rainures 86, un orifice de faible diamètre 88 étant prévu au droit de chaque intersection de la rainure 87 et d'une rainure 86 à travers la plaque 71. Au-dessus de celle-ci est prévue une contre-plaque 89 qui présente des rainures 90 tournées vers la plaque 71 et qui sont positionnées en face des rainures d'alimentation 87. Chaque rainure 90 est raccordée, à travers un trou 91 de la plaque 89, à une entrée d'alimentation en eau sous pression, elle-même raccordée par une canalisation adéquate à une pompe montée sur le point du ponton.

L'eau pompée dans la rainure 90 passe par les orifices 88 dans des rainures 86 pour se répandre entre les plaques 71 et 78 en créant entre celles-ci un coussin d'eau de très faible épaisseur qui améliore nettement le coefficient de frottement. En fait, la pression d'eau n'a besoin d'être appliquée que pendant l'avance des patins 3 sur les semelles 4.

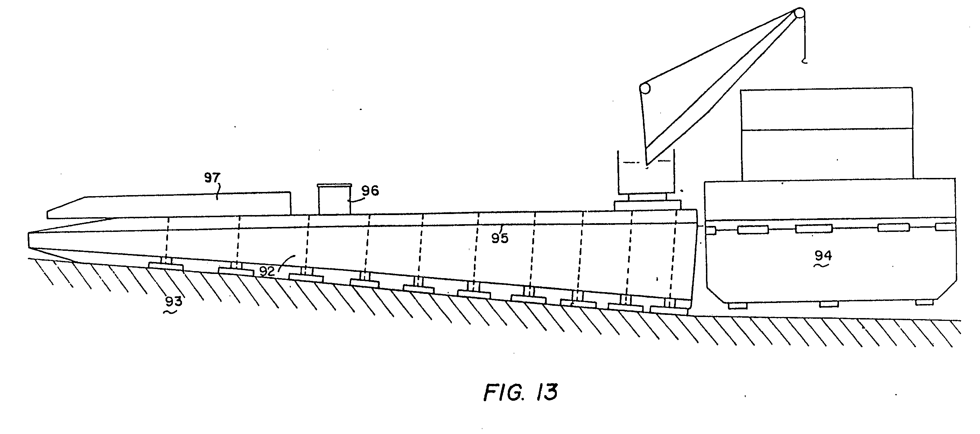

A la Fig. 13, on a represésenté schématiquement un ponton 92 ayant, en coupe longitudinale, une forme angulaire, qui est prévu pour servir d'appontement sur une plage 93. Dans l'exemple montré, on suppose que la pente de la plage 93 fait un angle de 4° avec l'horizontale. Dans ces conditions, si l'angle au sommet du ponton 92 est aussi de 4°, le plancher de celui-ci sera horizontal quand le ponton repose sur le fond de la plage. Le ponton 92, comme le ponton de la Fig. 1, est muni de béquilles 2 montées sur des patins semelles 3—4. Les axes des puits dans lesquels se logent les béquilles 2 font un angle de l'ordre de 4° ou moins avec la verticale.

On comprend qu'en actionnant les patins-semelles 3—4, comme on l'a décrit en relation avec les Figs. 1 à 12, on peut faire monter et descendre le ponton 92 sur la plage 93 en fonction de la marée de manière qu'un cargo 94, vu en coupe transversale, puisse rester à flot quel que soit le niveau de la mer 5.

Le ponton 92 a, en face du cargo 94, une hauteur suffisante pour que les navires appelés à coopérer avec lui soient toujours à flot quand le niveau de 5 atteint ou dépasse la ligne 95 tracée sur le ponton 92. Le plancher du ponton 92 est dégagé au maximum en prévoyant la cabine de commande 96 sur le côté, comme le montre la Fig. 14. Pour assurer une bonne adhérence du ponton 92 sur la plage, on prévoit dans le corps même de celui-ci des compartiments que l'on peut lester avec du sable et de l'eau dont le niveau est réglable au moyen de pompes. La coupe de la Fig. 14 montre une telle structure.

L'appontement constitué par le ponton 92 présente des avantages considérables sur les appontements mobiles flottants couramment utilisés. En effet, pendant son utilisation, le ponton est rigoureusement fixe et n'est plus soumis au mouvement des vagues, ce qui facilite tous les déplacements de véhicules sur son plancher. En cas de tempête, typhon ou autre perturbation du même type, le ponton 92 peut remonter et se placer à sec ce qui assure complètement sa sécurité. A son extrémité la plus proche de la terre, le ponton 92 peut être associé à une passerelle légère 97, qui peut être remontée le pont pour les déplacements, comme l'indique la Fig. 13.

Les manoeuvres de descente et de montée des béquilles 2 sont de préférence commandées, dans le ponton de la Fig. 1 comme dans celui de la Fig. 13, par un jeu de groupes hydrauliques babord et tribord. Chaque jeu peut, par exemple, comprendre 3 ou 4 groupes hydrauliques 98, Fig. 1, qui sont commandés à partir de la passerelle de commande 99 par des câbles électriques 100.

De même, les mouvements relatifs des patins et semelles sont commandés par des électro-vannes appliquant ou non aux vérins appropriés les pressions d'huile fournies par les groupes. Il est possible en agissant sur les diverses électro-vannes commandant les patins ou les béquilles d'exécuter les divers mouvements suivants. Pour avancer en ligne droite, les jeux de béquilles et de patins babord et tribord sont actionnés simultanément. Pour tourner, comme pour les véhicules à chenilles, un des jeux de béquilles et de patins est actionné tandis que l'autre est au repos, les béquilles levées par exemple. A noter que la section carrée des puits et des béquilles permet également de décaler angulairement les béquilles de 90°, donc la direction longitudinale des patins et semelles par exemple pour exécuter une ultime manoeuvre d'approche.

Quand le ponton est à l'arrêt à sec, on peut contrôler la course de descente des pistons 42 des vérins 22 des béquilles 2 afin de répartir les charges ou encore sur un sol mal nivelé de compenser des différences locales de niveaux.

A noter encore que s'il survient une panne sur une béquille 2, il est très facile de la placer en position haute en déverouillant la plaque 43, Fig. 6, en hissant la béquille par 38. Le nombre des béquilles doit bien entendu être prévu en excès pour pallier les pannes d'une ou d'un certain nombre de béquilles.

Il faut encore noter que, pour la remise à l'eau d'un ponton, il est très facile de réinstaller les béquilles à terre en les introduisant par le haut des puits 1, puis en leur accouplant les patins et les semelles.

Dans les exemples d'application décrits ci-dessus, on n'a pas préjugé de l'etat du sol sur lequel s'appliquent les semelles. En fait, quand ce sol à été préparé, il devient alors possible, à l'aide des jeux de béquilles, tels qu'on les a décrits, de déplacer non seulement des pontons très lourds, mais encore d'autres charges très lourdes que l'on déplace actuellement sur des rouleaux avec beaucoup de difficultés, comme les ponts en béton lancés d'une berge suivant une technique maintenant répandue. De même, les jeux de béquilles permettent de déplacer des bases de réservoirs en béton que l'on prévoit de moiller au fond de la mer à proximité des puits de pétrole marins. Bien entendu, dans ces cas d'utilisation, on doit prévoir dans les charges à transporter les puits 1 nécessaires pour loger les béquilles pendant le déplacement de la charge. Toutefois, il apparaîtra que la structure de ces puits est très simple et qu'elle n'entraîne pas une augmentation sensible du coût de la charge. La structure de chaque béquille peut être très soignée car une béquille peut servir plusieurs fois.

Il faut encore noter que le coefficient de glissement des surfaces adjacentes des patins et des semelles déjà amélioré en utilisant l'injection d'eau sous pression, comme on l'a décrit en relation avec les Figs. 11 et 12, peut encore être augmenté en utilisant un mélange d'eau et de détergent.

Il faut encore noter que, quand les moyens de déplacement dont un exemple de réalisation vient d'être décrit sont utilisés uniquement à terre pour déplacer des charges très lourdes, les puits 1 peuvent être remplacés par des moyens d'accrochage des béquilles plus simples et la longueur de celles-ci peut être réduite.

Les moyens de verrouillage montrés aux Figs. 4 et 5 et constitués par deux paires de bras pivotants reliés entre eux pour former un quadrilatère articulé peuvent alors être remplacés par des dispositifs d'accrochage plus simples, étant donné que ces moyens d'accrochage doivent permettre d'assurer la poussée des béquilles quand elles soulèvent la charge, ce qui peut être réalisé par des butées, et doivent maintenir les béquilles suspendues quand on les rétracte pour faire avancer les semelles.

Il faut également comprendre que, pour faire avancer une charge, telle qu'un ponton par exemple, il n'est pas toujours nécessaire de laisser la charge complètement reposer sur le sol au moment de l'avance des semelles, mais simplement reposer sur les béquilles paires alors que les béquilles impaires se rétractent, puis vice versa, un autre groupement que la parité simple pouvant être choisi.

**Revendications**

1. Moyens de déplacement à terre et/ou sur plage immergée ou non de lourdes charges, comprenant des jeux de béquilles (2) pratiquement verticales pouvant descendre ou monter dans des puits (1) pratiqués dans la charge a` déplacer, chaque béquille (2) portant à son extrémité inférieure un patin (3) pouvant glisser sur une semelle (4) associée, au moyen de vérins (82, 83) le déplacement de la charge étant obtenu en faisant descendre les béquilles (2) qui soulèvent la charge, puis en faisant glisser les patins (3) sur leurs semelles (4) associées en commandant lesdits vérins (82, 83) dans un sens de manière à déplacer l'ensemble de la charge et des béquilles (2) par rapport aux semelles (4) appliquées sur le sol, puis en remontant les béquilles pour poser la charge, et, enfin, en déplaçant les semelles (4) des béquilles relevées par rapport à leurs patins (3) en commandant les vérins (82, 83) en sens inverse, caractérisés en ce que les béquilles (2) sont amovibles et comportent, à leurs extrémités supérieures, des moyens de verrouillage (14) pour verouiller chaque béquille dans une gorge (26) pratiquée dans chaque puits (1), lesdits moyens de verrouillage (14) étant commutés en position de verrouillage quand on enfile une béquille (2) dans un puits (1) et que les moyens de verrouillage (14) atteignent ladite gorge (26), laquelle est creusée dans une section transversale du puits (1).

2. Moyens suivant la revendication 1, caractérisés en ce que les moyens de verrouillage (14) peuvent être déverrouillés par une commande extérieure pour sortir chaque béquille (2) de son puits (1).

3. Moyens suivant la revendication 2, caractérisés en ce que chaque puits (1) est ouvert aux deux bouts pour permettre la sortie ou l'entrée d'une béquille (2) par un bout ou l'autre, chaque patin (3) étant amovible de façon à permettre le passage de la béquille (2) seule par le bout supérieur du puits (1).

4. Moyens suivant la revendication 2 ou 3, caractérisés en ce que lesdits moyens de verrouillage (14) sont constitués par deux premiers bras de levier (18, 19) pivotant symétriquement autor d'un premier axe (20) solidaire du sommet (21) de la béquille (2) et de deux seconds bras de levier (32, 33) pivotant symétriquement autour d'un second axe (34), chaque second bras (32 ou 33) étant respectivement monté pivotant sur un premier bras (18 ou 19) de manière à former un quadrilatère articulé à deux paires de bras, les seconds bras (32, 33) étant sensiblement plus courts que les premiers bras (18, 19), les premiers et les seconds bras formant en position de verroüillage des angles ouverts vers le haut moins largement pour les premiers bras (18, 19) dont les extrémités (25, 24) sont engagées dans la gorge (26) du puits (1) que pour les seconds bras (32, 33), lesdites extrémités (25, 24) des premiers bras supportant la charge quand les béquilles (2) sont descendues et les seconds bras (32, 33) servant d'arcs-boutants empêchant les premiers bras (18, 19) de se refermer quand la béquille (2) est remontée et donc suspendue auxdits moyens de verrouillage (14).

5. Moyens suivant l'une des revendications 1 à 4, dans lesquels les moyens de liaison entre le bas d'une béquille (2) et le patin (3) associé sont constitués par une clavette (62) perpendiculaire à la direction de glissement du patin (3), ladite clavette (62) passant successivement à travers des trous (60, 61) prévus dans des pattes verticales (58, 59) soudées sur les patins (3) et de diamètre voisin de celui de la clavette (62), et des trous (56, 57) prévus dans les parois de la béquille (2), caractérisés en ce que le diamètre des trous (56, 57) prévus dans les parois de la béquille (2) est plus grand que celui de la clavette (62), de manière que, quande la béquille (2) supporte la charge, le bas de la béquille (2) repose directement sur le patin (3).

6. Moyens suivant la revendication 5, caractérisés en ce que ladite clavette (62) a une tête comportant une poignée (63) excentrant le centre de gravité de la clavette (62) et bloquant tout mouvement longitudinal de celle-ci, en position de couplage, mais facilement amovible pour permettre la séparation du patin (3) de la béquille (2).

7. Moyens suivant l'une des revendications 1 à 6, caractérisés en ce que la béquille (2) est constituée d'un verin (22) dont le sommet (21) constitue le sommet de la béquille (2) accroché auxdits moyens de verrouillage (14) et d'une poutre vertical (23) qui est reliée par des moyens d'accouplement (43, 45, 48) manoeuvrables du haut du puits (1) à l'extrémité de la tige (42) du vérin (22).

8. Moyens suivant l'une des revendications 1 à 7, caractérisés en ce que, entre les parties planes (71) du patin (3) qui glissent sur les parties planes (78) de la semelle (76, 77), on injecte de l'eau sous haute pression.

9. Moyens suivant la revendication 8, caractérisés en ce que l'eau est injectée dans un réseau de canaux (86) formés de la partie plane (78) de la semelle (76, 77) et d'une partie creusée dans la partie plane (71) du patin, les canaux (86) formant des dérivations réparties sur l'ensemble de la surface du patin.

10. Moyens suivant l'une des revendications 1 à 9, caractérisés en ce que les moyens de commande des vérins sont des groupes hydrauliques (98) répartis par zone et commandés à distance par des moyens electriques, afin de répartir les actions sur les vérins.

**Claims**

1. Transport means for displacement of heavy loads, on the ground and/or beach, either submerged or not, said transport means comprising sets of practically vertical leg means (2) mounted to raise and lower in lockers (1) made in the load to be displaced, each leg means (2) comprising at its lower end a shoe means (3) capable of sliding on an associated sole means (4) by means of jack means (82, 83), the displacement of the load occurring by causing the leg means (2) to move down, thus causing the load to rise, then by causing the shoe means (3) to slide over the associated sole means (4) in one direction so as to displace the assembly formed by the load and the leg means (2) relative to the sole means (4) applied to the ground, then by lifting back the leg means (2) to set the load down, and then by displacing the sole means (4) while they are raised relative to their shoe means (3) by working the jack means (82, 83) in the opposite direction, characterized by the fact that said leg means (2) being movable and comprising, at their upper ends, locking means (14) for locking each leg inside a groove (26) provided in each associated locker (1), said locking means (14) being switched to their locked condition when a leg means (2) is pushed into a locker (1) and when said locking means (14) reach the groove (26) which is provided in a cross section of the locker (1).

2. Transport means according to claim 1, characterized by the fact that the locking means (14) may be unlocked responsive to an external control in order to move each leg means (2) out of its locker (1).

3. Transport means according to claim 2 characterized by the fact that each locker (1) is open at both ends, to make it possible to take out or place the leg means (2) in either end, each shoe means (3) being removable to enable passage of the leg means (2) alone through the upper end of the locker (1).

4. Transport means according to either claim 2 or 3, characterized by the fact that said locking means (14) comprises a first set of two lever arms (18, 19) symmetrically pivoting around a first shaft (20) fixed on the top (21) of the leg means (2) a second set of two lever arms (32, 33) symmetrically pivoting around a second shaft (34), each of said second arms (either 32 or 33) respectively being pivotally mounted on one of said first arms (either 18 or 19) to form an articulated quadrilateral figure having two pairs of arms, the second arms (32, 33) being substantially shorter than the first arms (18, 19), the first and the second arms, when in locked condition, respectively forming upward-open angles that are less wide with respect to the first arms (18, 19), the ends (25, 24) of which are engaged in the groove (26) of the locker (1), than with respect to the second arms (32, 23), the said ends (25, 24) of the first arms supporting the load when the leg means (2) have been moved down, and the second arms (32, 33) serving as stretchers which prevent the first arms (18, 19) from closing when the leg means (2) are lifted and hanging on said locking means (14).

5. Transport means according to one of the claims 1 to 4, wherein connection means between the bottom of a leg means (2) and the associated shoe means (3) are comprised of a pin means (62) extending perpendicularly to the direction in which the shoe means (3) slides, said pin means (62) running successively through holes (60, 61) in vertical tabs (58, 59) welded on the shoe means (3), the diameter of said holes (60, 61) being approximately the diameter of the pin means (62), and said pin means (62) further extending through holes (56, 57) in the walls of the leg means (2), being greater than the diameter of the pin means (62) so that, when the leg means (2) support the load, the bottom of the leg means (2) is directly applied onto the associated shoe means (3).

6. Transport means according to claim 5 characterized by the fact that said pin means (62) has a head comprising a handle (63) shifting the center of gravity of the pin means (62) and blocking any longitudinal motion thereof, when in a connected position, but rendering the pin means easily removable to enable a separation of the shoe means (3) from the leg means (2).

7. Transport means according to any one of the claims 1 to 6, characterized by the fact that the leg means (2) is comprised of a jack means (22) the top (21) of which constitutes the top of the leg means (2) hooked to the said locking means (14), and a vertical beam (23) that is coupled by coupling means (43, 45, 48) controllable from the upper end of the locker (1) to the end of the rod (42) of the jack means (22).

8. Transport means according to any one of the claims 1 to 7, characterized by the fact that between the flat parts (71) of the shoe means (3) which slide over the flat parts (78) of the sole means (76, 77), water under high pressure is injected.

9. Transport means according to claim 8 characterized by the fact that said water is injected through a network of grooves (86) formed in the flat part (78) of the sole means (76, 77) and in parts bored into the flat part (71) of the shoe means, the grooves (86) forming branches distributed over the whole surface of the shoe means.

10. Transport means according to one of claims 1 to 9, characterized by the fact that controlling means for controlling the jack means are hydraulic groupings (98) distributed into zones, and remotely controlled by electric means, in order to distribute the actions to the jack means.

**Patentansprüche**

1. Vorrichtung zum Versetzen schwerer Laster auf dem Erdboden und/oder überfluteten oder trockenen Stränden, die Gruppen von im wesentlichen vertikalen Stützen (2) enthält, die innerhalb von Schächten (1) in der zu versetzenden Last auf und ab bewegbar sind, wobei jede Stütze (2) an ihrem unteren Ende einen Schuh (3) enthält, der auf einer zugeordneten Flußplatte (4) mit Hilfe von Kolben/Zylindereinheiten (82, 83) gleitend bewegbar ist, und wobei das Versetzen der Last dadurch erfolgt, daß zunächst die Stützen (2) abwärts bewegt werden, um die Last anzuheben, daß darauf die Schuhe (3) auf den Fußplatten zum Gleiten in einer Richtung gebracht werden, um die aus der Last und den Schuhen (3) bestehende Vorrichtung relativ zu den auf dem Boden lagernden Fußplatten (4) zu versetzen, daß dann die Stützen (2) eingefahren werden, um die Last abzusetzen, worauf die angehobenen Fußplatten (4) relativ zu den Schuhen (3) durch die Kolben/Zylindereinheiten (82, 83) in entgegengesetzter Richtung verschoben werden, *dadurch gekennzeichnet,* daß die bewegbaren Stützen (2) an ihren oberen Enden mit Verriegelungsmitteln (14) zum Verriegeln jeder Stütze innerhalb einer in jedem Schacht (1) angebrachten Nut (26) versehen sind, daß die Verriegelungsmittel (14) ihre Verriegelungsstellung einnehmen, sobald die Stützen (2) in die Schächte (1) eingeführt werden, und daß sie wirksam werden, wenn sie die in einer Querschnittsebene der Schächte (1) eingearbeitete Nut (26) erreichen.

2. Vorrichtung nach Ansprugh 1, *dadurch gekennzeichnet,* daß die Verriegelungsmittel (16) durch außere Steuermittel lösbar sind, um die Stützen (2) aus den Schächten (1) herausführen zu können.

3. Vorrichtung nach Anspruch 2, *dadurch gekennzeichnet,* daß jeder Schacht (1) an beiden Enden offen ist, um das Ein- und Ausführen der Stützen (2) an beiden Enden zu ermöglichen, und daß die Schuhe (3) abnehmbar sind, um das Einführen der Stützen nur an den oberen Enden zu ermöglichen.

4. Vorrichtung nach Anspruch 2 oder 3, *dadurch gekennzeichnet,* daß die Verriegelungsmittel (14) zwei erste Hebelarme (18, 19) enthalten, die symmetrisch um eine erste Ache (20) drehbar sind, die am oberen Ende (21) der Stütze (2) angebracht ist, und daß zwei zweite Hebelarme (32, 33) symmetrisch um eine zweite Achse drehbar sind, wobei die zweiten Hebelarme (32, 33) jeweils drehbar an den ersten Hebelarmen (18, 19) so gelagert sind, daß die Hebelarmpaare ein gelenkiges Viereck bilden, daß die zweiten Hebelarme (32, 33) wesentlich kürzer als die ersten Hebelarme (18, 19) sind, daß die ersten und zweiten Hebelarme in verriegeltem Zustand nach oben offene Winkel bilden, von denen der Winkel zwischen den ersten Hebelarmen (18, 19), deren Enden (24, 25) in Eingriff mit der Nut (26) des Schachtes (1) sind, kleiner ist als zwischen den zweiten Hebelarmen (32, 33), daß die enden (24, 25) der ersten Arme di Last tragen, wenn die Stützen (2) in ihrer unterem Stellung sind, und daß die zweiten Hebelarme (32, 33) als Bogenstrebe dienen und verhindern, daß die ersten Arme (18, 19) sich schließen, wenn did Stütze (2) hochgezogen ist und in den Verriegelungsmitteln (14) hängt.

5. Vorrichtung nach einem der Ansprüche 1 bis 4, bei der die Verbindungsmittel zwischen dem unteren Ende einer Stütze (2) und dem zugehörigen Schuh (3) aus einem Bolzen (62) bestehen, der senkrecht zur Gleitrichtung des Schuhes (3) verläuft und sich nach und nach durch Bohrungen (60, 61) in vertikalen, mit dem Schuh verschweißten Ansätzen (58, 59) bewegt, wobei der Durchmesser der Löcher (60, 61) etwa gleich dem Durchmesser des Bolzens (62) ist und der Bolzen (62) sich ferner durch Löcher (56, 57) in den Wänden der Stütze (2) erstreckt, *dadurch gekennzeichnet,* daß der Durchmesser der Löcher (56, 57) in den Wänden der Stütze (2) größer als der Durchmesser des Bolzens (62) ist, so daß das untere Ende der Stütze unmittelbar auf dem Schuh (3) ruht, wenn die Stütze (2) die Last trägt.

6. Vorrichtung nach Anspruch 5, *dadurch gekennzeichnet,* daß der Bolzen (62) einen Kopf mit einem Handgriff (63) enthält, durch den in verbundenem Zustand der Schwerpunkt des Bolzens (62) verschiebbar und jegliche Längsbewegung des Bolzens blockierabar ist, der jedoch leicht abnehmar ist, um die Trennung des Schuhes (3) von der Stütz (2) zu erlauben.

7. Vorrichtung nach einem der Ansprüche 1 bis 6, *dadurch gekennzeichnet,* daß die Stütze (2) eine Hubvorrichtung (22) mit einem Zylinder enthält, dessen oberes Ende (21) zugleich das obere Ende der Stütze (2) bildet und mit den Verriegelungsmitteln (14) verbunden ist, und daß die Stütze (2) außerdem einen vertikalen Träger (23) enthält, der über Verbindungsmittel (43, 45, 48), die vom oberen Ende des Schachtes (1) steuerbar sind, mit dem Ende der Kolbenstange (42) der Hubvorrichtung (22) verbunden ist.

8. Vorrichtung nach einem der Ansprüche 1 bis 7, *dadurch gekennzeichnet,* daß zwischen die ebenen Teile (71) des Schuhes (3) und die darauf gleitenden ebenen Teile der Fußplatte (76, 77) Wasser mit hohem Druck injiziert wird.

9. Vorrichtung nach Anspruch 8, *dadurch gekennzeichnet,* daß Wasser durch ein Netz von Kanälen (86) injiziert wird, die sich im ebenen Teil (78) der Fußplatter (76, 77) und in einem Teil des ebenen Teils (71) des Schuhes befinden, und daß die Kanäle (86) Abzweige enthalten, die über die gesamte Oberfläche des Schuhes verteilt sind.

10. Vorrichtung nach einem der Ansprüche 1 bis 9, *dadurch gekennzeichnet,* daß die Steuermittel für die Hubvorrichtung aus hydraulischen Apparaten bestehen, die in Zonen unterteilt sind und durch elektrische Mittel fernbedienbar sind, um die Wirkung der Hubvorrichtungen zu verteilen.

FIG. 1

0 002 146

FIG. 2

0 002 146

FIG. 4

3

*FIG. 5*

FIG.3

FIG.6

FIG. 7

FIG. 8

0 002 146

FIG. 14

FIG. 9

7

FIG. 10

0002 146

FIG. 12

FIG. 11

FIG. 13